Europäisches Patentamt

European Patent Office

Office européen des brevets

(11) Numéro de publication: **0 006 980**

**A1**

(12) **DEMANDE DE BREVET EUROPEEN**

(21) Numéro de dépôt: **79101277.6**

(22) Date de dépôt: **27.04.79**

(51) Int. Cl.³: **G 01 N 27/68**
**F 02 B 77/00**

(30) Priorité: **28.04.78 FR 7812809**

(43) Date de publication de la demande:
**23.01.80 Bulletin 80/2**

(84) Etats Contractants Désignés:
**DE FR GB IT**

(71) Demandeur: **Murtin, Fernand Raoul Charles**
**16 bis rue Augereau**
**F - 75007 Paris(FR)**

(72) Inventeur: **Murtin, Fernand Raoul Charles**
**16 bis rue Augereau**
**F - 75007 Paris(FR)**

(74) Mandataire: **Casalonga, Alain et al,**
**Bureau D.A. Casalonga Lilienstrasse 77**
**D-8000 München 80(DE)**

(54) Procédé de mesure de la concentration en oxygène dans un mélange gazeux, en particulier de détermination de pourcentage d'oxygène dans les gaz d'échappement d'un moteur à combustion interne ou externe et sondes à ionisation pour la mise en oeuvre de ce procédé.

(57) Procédé de mesure de la concentration en oxygène dans un mélange gazeux, en particulier de détermination de pourcentage d'oxygène dans les gaz d'échappement d'un moteur à combustion interne ou externe et sondes à ionisation pour la mise en oeuvre de ce procédé.

Pour déterminer le pourcentage d'oxygène dans les gaz d'échappement d'un moteur à combustion interne ou externe, on dispose une sonde à ionisation (1) dans le trajet des gaz. Cette sonde est alimentée en parallèle avec une sonde identique (2) traversée par l'air ambiant porté à la même température que les gaz d'échappement. La somme (13) des courants recueillis par les deux sondes est comparée (14) soit à une tension proportionnelle à la haute tension (17 à 19), soit à une tension constante (16), soit à un courant constant (16a), et en fonction de la différence, on régule la haute tension (7) d'alimentation des sondes. D'autre part, les courants recueillis par les sondes sont comparés (10), et le résultat de la comparaison permet de déterminer le pourcentage d'oxygène.

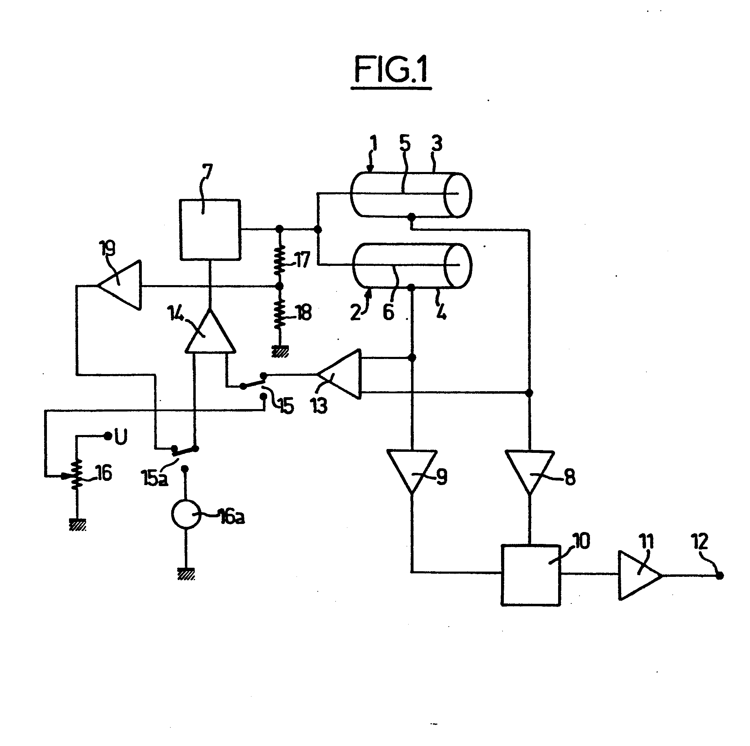

Référence Figure 1

FIG.1

La présente invention se rapporte à un procédé de mesure des concentrations en oxygène dans un mélange gazeux et en particulier dans les gaz issus d'une combustion chimique tels que les gaz d'échappement d'un moteur à combustion interne ou externe. L'invention concerne également une sonde électrique à ionisation permettant la mise en oeuvre du procédé de l'invention et la détermination en particulier du pourcentage d'oxygène dans les gaz d'échappement d'un moteur à combustion, d'un réacteur ou d'une chaudière d'un type quelconque.

Pour déterminer la concentration en oxygène des gaz de combustion, en particulier des gaz d'échappement, on connaît une sonde comportant un tube cylindrique fermé renfermant de l'oxygène ou de l'air, et que l'on dispose sur le trajet des gaz à analyser. Ce tube est revêtu intérieurement et extérieurement d'une couche de bioxyde de zirconium et d'une couche d'un catalyseur, par exemple du platine. Dans cette sonde connue, on a déterminé que la force électromotrice recueillie selon la loi d'Arrhénius entre deux de ses faces, dont l'une est en contact avec l'air et l'autre avec les gaz de combustion, varie en fonction du pourcentage d'oxygène contenu dans les gaz passant autour de la sonde. La force électromotrice fournie par cette sonde est sensiblement constante depuis un pourcentage d'oxygène nul jusqu'au rapport stoéchiométrique de la combustion; pour ce rapport d'oxygène, ladite force électromotrice tombe brusquement à une valeur beaucoup plus faible et s'y maintient sensiblement lorsque le pourcentage d'oxygène augmente encore. Par conséquent, cette sonde connue peut être utilisée avec des moteurs à combustion en indiquant par un signal en tout ou rien, c'est-à-dire un signal logique, si le rapport stoéchiométrique de la combustion existe ou non.

Cependant, cette sonde connue présente certains inconvénients. En particulier, cette sonde est sensible à l'action du plomb contenu dans certains carburants, en particulier ceux vendus en Europe, le plomb attaquant le platine de la couche de catalyseur.

En outre, du fait que cette sonde connue fournit une information discontinue au voisinage du rapport stoéchiométrique, il se pose des problèmes de stabilité pour tout système d'asservissement utilisant cette sonde comme générateur de valeur vraie principale.

Ladite sonde connue est également sensible à l'encrassement par des hydrocarbures lourds qui provoquent des dépôts de suie.

On connaît également une sonde à semi-conducteur comportant un substrat sur lequel on dépose une couche d'oxyde de titane que l'on rend résistive par dopage à l'yttrium. On place cette sonde dans le trajet des gaz à analyser et on la connecte par exemple dans une branche d'un pont de Wheatstone, et on mesure la variation de la résistance de cette sonde. La variation de conductivité de cette sonde varie avec la diffusion dans la jonction semi-conductrice des ions oxygène. Jusqu'à présent, on n'a pas pu réaliser une telle sonde à semi-conducteur avec une couche d'oxyde de titane suffisamment fine pour obtenir un temps de réponse suffisamment court. De plus une telle sonde se comporte comme une thermistance et nécessite l'introduction d'une compensation de température. Compte tenu du temps de réponse très long, de l'ordre de plusieurs secondes, des sondes de ce type, il n'est pas possible d'utiliser leurs signaux de réponse comme paramètres principaux dans un système de régulation, par exemple pour la richesse du mélange combustible d'un moteur à combustion interne. D'autre part, la mobilité des ions oxygène varie beaucoup, lors de leur pénétration, avec l'encrassement de la sonde, ce qui a pour conséquence de modifier sensiblement la réponse de la sonde.

Pour plus de précision sur ces types de sondes connues, on pourra se reporter à la communication de W. J. Fleming "Sensitivity of the Zirconia oxygen sensor to temperature and flow rate of exhaust gas" SAE paper N° 760020 présentée à Detroit (USA) en février 1976 au congrès "Internationl Automotive Engineering Congress and Exposition".

La présente invention a pour objet un procédé de mesure de la concentration en oxygène dans un mélange gazeux en utilisant la variation de courant résultant d'une variation du potentiel initial d'ionisation en fonction de la concentration en oxygène. L'utilisation de ce phénomène physique permet selon la présente invention la détermination de la concentration en oxygène dans un mélange gazeux et en particulier dans les gaz issus d'une combustion chimique tels que les gaz d'échappement d'un moteur à combustion interne ou externe. Selon l'invention on provoque l'ionisation continue ou par décharge, du mélange gazeux à analyser et on mesure une grandeur électrique liée au potentiel initial d'ionisation dans le mélange gazeux. La grandeur électrique mesurée peut être soit le courant apparaissant lors d'une ionisation continue entre deux électrodes dont l'une est soumise à une haute tension soit un signal de tension proportionnel à haute tension d'alimentation.

Dans un premier mode de mise en oeuvre du procédé de l'invention, on provoque la même ionisation continue à la fois dans un gaz de référence pratiquement à la même température et dans le mélange gazeux à analyser et l'on effectue le rapport ou la différence des courants mesurés pour en déduire la mesure recherchée de la concentration en oxygène.

Dans un deuxième mode de mise en oeuvre du procédé de l'invention on provoque au contraire une ionisation par décharge dans une cellule d'ionisation du type à éclateur. On peut alors mesurer la valeur moyenne du courant apparaissant entre deux électrodes dont l'une est soumise à une haute tension. On peut également mesurer la fréquence des décharges électriques apparaissant entre ces deux électrodes.

Dans tous les cas on procède en outre à la régulation de la haute tension d'alimentation de l'électrode source de façon que le rapport haute tension/courant ou la haute tension elle-même ou encore le courant délivré par l'alimentation à haute tension, soit maintenu à une valeur constante.

Dans le deuxième mode de mise en oeuvre du procédé de l'invention, l'ionisation par décharges présente l'avantage d'être particulièrement significative du taux de concentration en oxygène du fait des caractéristiques particulières de photo-ionisation des molécules d'oxygène qui se superpose au phénomène d'ionisation électrique. L'effet de variation de la densité du mélange gazeux en fonction de sa température et de sa pression qui subsiste cependant reste du second ordre et peut en général être négligé de ce fait. Si l'on désire cependant en tenir compte, il est facile de procéder à une correction de la mesure puisque l'on peut aisément déterminer la température et la pression du mélange gazeux à analyser et par conséquent la correction à effectuer.

Dans le cas où le procédé de l'invention est appliqué à la mesure de la concentration en oxygène dans des gaz issus d'une combustion chimique tels que des gaz d'échappement d'un moteur à combustion interne ou externe, on notera qu'en toute rigueur la mesure se trouve légèrement faussée par l'existence des oxydes d'azote dans les gaz d'échappement lesquels présentent un potentiel initial d'ionisation inférieur à celui de l'oxygène. En réalité cependant les quantités d'oxyde d'azote sont très nettement inférieures à celles de l'oxygène de sorte que cet effet est pratiquement négligeable. De plus, la quantité d'oxyde d'azote contenue dans les gaz d'échappement diminue pour les pourcentages croissants d'oxygène. Or, pour les faibles pourcentages d'oxygène la variation du potentiel initial d'ionisation en fonction de l'oxygène est plus importante ce qui augmente la précision de la mesure et rend négligeable l'éventuelle influence de ces oxydes d'azotes au voisinage des faibles pourcentages d'oxygène qui sont ceux que présentent les gaz d'échappement lors d'un fonctionnement normal.

La présente invention a également pour objet une sonde électrique permettant la mise en oeuvre du procédé de l'invention ainsi que l'analyse des gaz issus d'une combustion chimique et en particulier la détermination de la concentration d'oxygène dans les gaz d'échappement d'un moteur à combustion interne ou externe. La sonde de l'invention ne présente pas les inconvénients des sondes connues précitées et notamment leur manque de fidélité et de fiabilité. Elle est de plus d'un prix de revient de fabrication relativement bas.

Dans un premier mode de réalisation, la sonde électrique à ionisation de la présente invention comprend une alimentation haute tension; une première cellule à ionisation comportant une électrode de source reliée à l'alimentation et une électrode réceptrice, ladite première cellule étant

disposée dans le trajet des gaz à analyser; la sonde comprend en outre une deuxième cellule à ionisation identique à la première cellule dont l'électrode de source est également reliée à l'alimentation et traversée par de l'air ambiant porté pratiquement à la même température que celle des gaz traversant la première cellule et qui joue le rôle d'un gaz de référence de façon à s'affranchir des erreurs de mesure résultant des conditions de température et de pression des gaz à analyser. La sonde électrique de l'invention comporte en outre un dispositif de traitement recueillant les courants apparaissant sur les électrodes réceptrices des deux cellules. Les deux électrodes de source ionique des deux cellules peuvent être alimentées soit avec une haute tension positive, soit avec une haute tension négative. Selon un mode de réalisation de l'invention la sonde comporte en outre des moyens permettant de réguler la source de haute tension de façon qu'elle fournisse une tension ou un courant constant. Selon un autre mode de réalisation les moyens de régulation permettent de réguler la source de haute tension de façon que le rapport haute tension/courant délivré par la source soit constant.

Le dispositif de traitement de la sonde de l'invention peut comporter soit des moyens permettant de produire un signal proportionnel à la différence des courants fournis par les deux cellules à ionisation précitées soit des moyens permettant de fournir un signal proportionnel au rapport des courants fournis par les deux cellules précitées.

Chacune des cellules à ionisation comprend avantageusement un tube cylindrique en matériau électriquement conducteur dans l'axe duquel est disposée une électrode de source constituée par un fil d'émission conducteur supporté par des moyens isolants appropriés.

Dans un autre mode de réalisation de l'invention la sonde électrique à ionisation comprend une alimentation haute tension et une cellule à ionisation comportant une électrode sensiblement plane reliée à l'alimentation haute tension ainsi qu'une deuxième électrode effilée en forme de pointe disposée perpendiculairement à l'électrode plane et écartée de cette dernière de façon à constituer une cellule à éclateur qui est disposée dans le trajet des gaz à analyser. On notera que l'électrode effilée en forme de pointe peut être avantageusement réalisée sous la forme d'un fil très mince dont l'extrémité est disposée à un certain écartement de l'électrode sensiblement plane opposée. La sonde de l'invention comporte en outre un dispositif de traitement recueillant le courant apparaissant sur l'électrode effilée en forme de pointe.

Dans le cas où la sonde de l'invention est destinée à mesurer la concentration de l'oxygène dans les gaz issus d'une combustion chimique l'électrode plane est de préférence alimentée avec une haute tension positive. De plus, cette haute tension est de préférence peu supérieure au potentiel initial d'ionisation de l'oxygène.

Dans le cas de gaz issus d'une combustion chimique en effet le mélange gazeux comprend en général une proportion importante d'eau dont le potentiel initial d'ionisation est légèrement supérieur à celui de l'oxygène mais cependant assez proche de ce dernier. On a constaté que lorsque l'on alimentait la sonde de l'invention de façon que l'électrode plane soit positive et la pointe négative, les électrons émis parcouraient une distance plus faible de sorte que l'on ne risquait pratiquement plus d'ioniser les molécules d'eau. Le résultat de la mesure reste donc plus précis.

La présente invention sera mieux comprise à l'aide de la description détaillée de quelques modes de réalisation pris à titre d'exemples non limitatifs et illustrés par les dessins annexés sur lesquels :

la fig. 1 est un schéma synoptique d'un dispositif de mesure selon un premier mode de réalisation conforme à la présente invention;

les fig. 2 à 4 sont des graphiques permettant d'expliquer le fonctionnement du dispositif de mesure de la fig. 1;

la fig. 5 montre schématiquement un deuxième mode de réalisation d'une sonde selon la présente invention;

la fig. 6 est un premier schéma électrique d'une sonde selon l'invention dans laquelle la mesure se fait en mainte-nant $V_{HT}/I_{HT}$ constant;

la fig. 7 est un deuxième schéma montrant le circuit électrique d'une sonde selon l'invention dans laquelle la mesure se fait en maintenant constant le courant d'alimentation haute tension $I_{HT}$.

Tel qu'il est représenté sur la fig. 1, le dispositif de mesure de l'invention comporte deux cellules à ionisation identiques 1 et 2. Chacune de ces deux cellules comporte un tube cylindrique en matière électriquement conductrice 3, 4 respectivement, un fil métallique 5, 6 respectivement étant disposé dans l'axe de chaque tube et supporté par des moyens isolants (non représentés) de façon à être isolé du tube électriquement conducteur correspondant.

Les deux fils 5, 6 sont reliés ensemble ainsi qu'à un dispositif 7 d'alimentation en haute tension. La haute tension fournie par le dispositif d'alimentation 7 est régulée de façon à produire une décharge corona continue entre chaque fil électriquement conducteur 5, 6 et le tube correspondant 3, 4.

Chaque tube cylindrique 3, 4 est relié, par l'intermédiaire d'un amplificateur 8, 9 respectivement à une entrée d'un dispositif de traitement 10 destiné à traiter les courants d'ionisation recueillis par les cellules 1 et 2. Le dispositif de traitement 10 peut effectuer soit la différence des courants recueillis par les cellules 1 et 2, soit le rapport de ces deux courants. A cet effet, le dispositif de traitement 10 comporte, de façon connue en soi, un ou plusieurs amplificateurs opérationnels. Le dispositif de traitement 10 est relié, par l'intermédiaire d'un amplificateur 11 à une borne de sortie 12 sur laquelle on recueille un signal représentant le résultat de la mesure.

Les tubes cylindriques 3, 4 des sondes 1 et 2 sont, d'autre part, reliés chacun à une entrée d'un amplificateur-sommateur 13 dont la sortie est reliée à l'un des contacts fixes d'un inverseur 15 dont l'autre contact fixe est relié au curseur d'un potentiomètre 16 alimenté par une tension stabilisée U. Le contact mobile de l'inverseur 15 est relié à l'une des entrées d'un amplificateur-comparateur 14 dont l'autre entrée est reliée au contact mobile d'un inverseur 15a dont l'un des contacts fixes est relié à une source 16a de courant de référence et dont l'autre contact fixe reçoit, par l'intermédiaire d'un diviseur à résistance 17, 18 et d'un amplificateur 19, une tension proportionnelle à la haute tension fournie par le dispositif d'alimentation 7.

Dans la position des inverseurs 15 et 15a représentée sur la fig. 1, le résultat de la mesure issu de l'amplificateur 13 se trouve donc appliqué au dispositif d'alimentation 7 par l'intermédiaire de la première entrée de l'amplificateur-comparateur 14 qui reçoit en outre sur sa deuxième entrée une basse tension proportionnelle à la haute tension fournie par le dispositif d'alimentation 7, par l'intermédiaire de l'amplificateur 19 et de l'inverseur 15a. On se trouve donc en présence d'un système régulé maintenant constant le rapport $V_{HT}/I_{HT}$ quelles que soient les variations du courant mesuré (où $V_{HT}$ est la tension d'alimentation des sondes et $I_{HT}$ le courant fourni par le dispositif 7).

Dans l'autre position de l'inverseur 15, au contraire, l'amplificateur-comparateur 14 reçoit sur sa première entrée une tension de référence stabilisée provenant du potentiomètre 16. On se trouve cette fois en présence d'un système régulé maintenant constante la tension d'alimentation des sondes $V_{HT}$. Si enfin on inverse la position de l'inverseur 15a en reliant la source de courant de référence 16a à la deuxième entrée de l'amplificateur-comparateur 14, on obtient un système régulé maintenant constant le courant d'alimentation des sondes $I_{HT}$.

Selon le mode d'utilisation préféré de l'invention, le dispositif de mesure décrit ci-dessus est destiné à la mesure du pourcentage d'oxygène dans les gaz d'échappement d'un moteur à combustion interne ou externe. Toutefois, l'invention n'est pas limitée à ce domaine et peut s'appliquer à de nombreux autres domaines.

Dans le cas où le dispositif de l'invention est destiné à la mesure du pourcentage d'oxygène dans les gaz d'échappement d'un moteur à combustion interne, on dispose l'une des deux cellules, par exemple la cellule 1 dans le trajet de ces gaz d'échappement, de préférence de façon que la vitesse des gaz d'échappement passant dans cette cellule soit faible. La cellule 2 sert alors de cellule de référence et doit être parcourue par l'air ambiant.

Pour assurer un fonctionnement correct du dispositif de mesure de l'invention, il est important que les densités des gaz parcourant les deux cellules 1, 2 soient pratiquement égales. Etant donné que la densité d'un gaz est égale au rapport de sa pression par sa température, et que les pressions des gaz passant dans les deux cellules 1, 2 peuvent être pratiquement égales, il faut que la température de l'air ambiant passant dans la cellule 2 soit pratiquement égale à la température des gaz d'échappement passant dans la cellule 1. A cet effet, on peut disposer la cellule 2 à proximité de la cellule 1 et l'alimenter en air ambiant par des conduites appropriées. Il faut toutefois remarquer que les températures des gaz passant dans les cellules 1, 2 peuvent ne pas être absolument égales, une différence de 10°C pouvant en général être tolérée. Cependant, si dans certains cas, les densités des gaz ou leurs températures sont très différentes, il faut prévoir des circuits de correction (non représentés) dont les branchements sont évidents pour l'homme de l'art.

Dans le mode de réalisation préféré de l'invention, le diamètre intérieur des tubes 3 et 4 est de l'ordre de grandeur de 2 millimètres et leur longueur est de l'ordre de grandeur de 5 millimètres. Le fil d'émission 5, 6 est en tungstène doré et a un diamètre d'environ 10 à 20 microns. Du fait que les cellules 1 et 2 ont de très petites dimensions, il est facile de les disposer par exemple dans une conduite d'échappement d'un moteur à combustion interne. Toutefois, les dimensions des cellules 1 et 2 peuvent être beaucoup plus grandes, la valeur de la haute tension fournie par le dispositif d'alimentation 7 étant, le cas échéant, augmentée en conséquence.

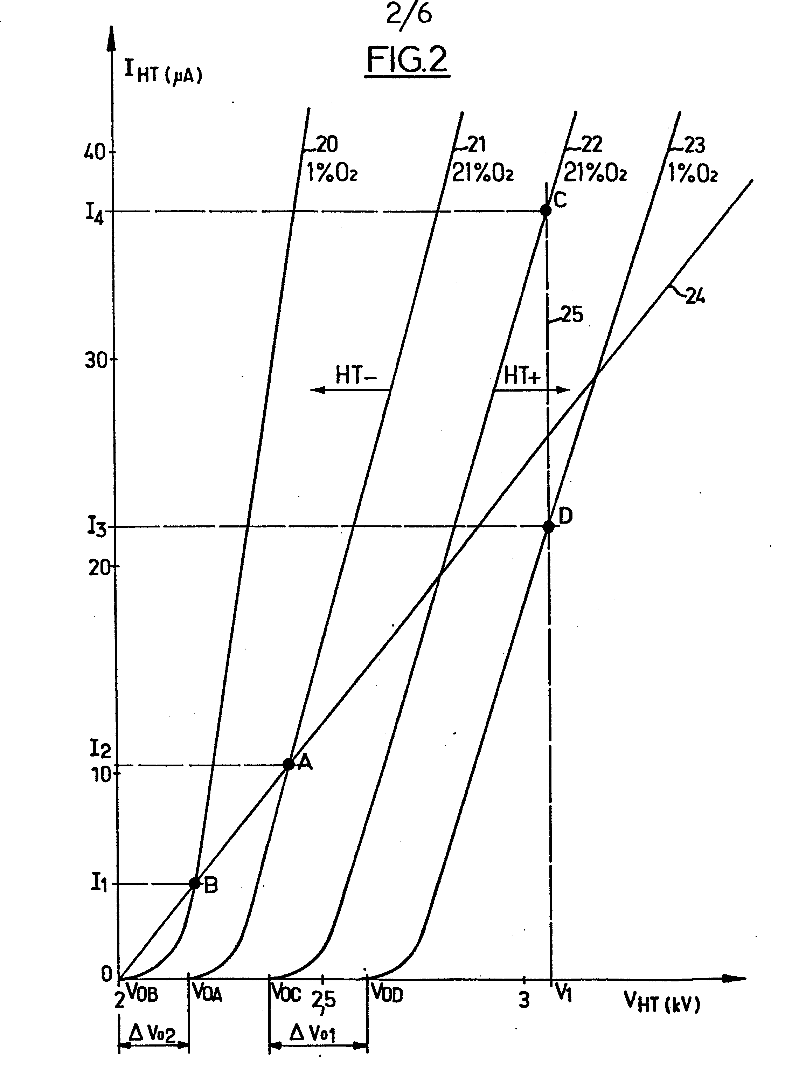

Sur le graphique de la fig. 2 on a représenté quatre courbes caractéristiques, référencées 20 à 23, d'une cellule telle que les cellules 1 ou 2 parcourues par des gaz à différentes concentrations d'oxygène, les courbes 21 et 22 correspondant au cas de l'air à une pression de 760 millimètres de mercure et à une température de 300°K environ, la courbe 21 étant établie pour une haute tension négative, et la courbe 22 pour une haute tension positive, les courbes 20 et 23 étant tracées comme expliqué ci-dessous.

On a également tracé sur le graphique de la fig. 2 une droite 24 correspondant à un $\dfrac{V_{HT} - V_{OB}}{I_{HT}}$ constant, $V_{HT}$ et $I_{HT}$ étant la tension et le courant fournis par la source 7. On notera que le choix de la position de la droite 24 défini sur la fig. 2 par son origine $V_{OB}$ est parfaitement arbitraire, la droite 24 pouvant se déplacer parallèlement à elle-même. On a également tracé en traits interrompus la droite 25 correspondant à une valeur $V_1$ constante de la haute tension.

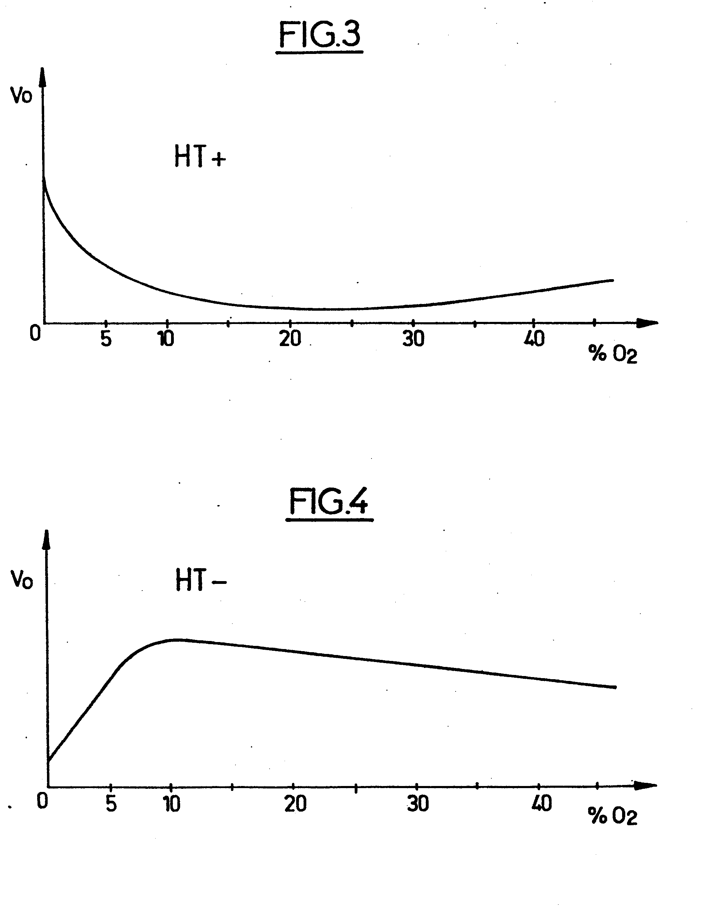

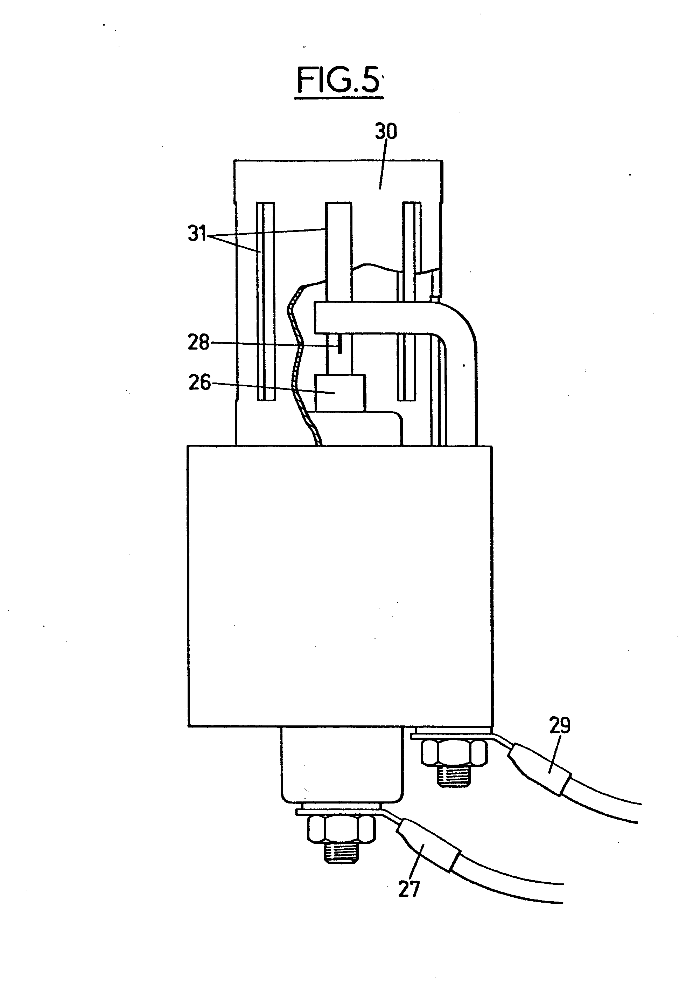

D'autre part, les courbes des fig. 3 et 4, correspondant respectivement à une haute tension positive et à une haute tension négative fournies par une source de haute tension à une cellule telle que décrite ci-dessus montrent que la valeur $V_o$ du potentiel initial d'ionisation d'une cellule varie en fonction de la proportion d'oxygène dans le gaz traversant cette cellule. Dans le cas de l'air à pression de 760 mm de mercure et à 300°K environ, le potentiel initial d'ionisation est de 2400 V environ pour une haute tension positive et de 2000 V environ pour une haute tension négative. Pour un moteur à combustion interne fonctionnant en mélange pauvre, la valeur optimale de la proportion d'oxygène dans les gaz d'échappement doit être comprise entre 1 et 10% environ. Dans le cas d'une alimentation en haute tension positive, le potentiel initial d'ionisation $V_o$ de la cellule décroît lorsque la proportion d'oxygène augmente de 0 à 10% tandis qu'avec une haute tension négative, la valeur du potentiel initial d'ionisation augmente lorsque la proportion d'oxygène augmente de 0 à 10%.

Par conséquent, pour déterminer la proportion d'oxygène dans les gaz d'échappement, on peut reporter les valeurs du potentiel initial d'ionisation $V_o$ tirées de la courbe de la fig. 3 ou de la courbe de la fig. 4 sur le graphique de la fig. 2 et tracer les courbes correspondantes (20, 23 par exemple) du courant d'ionisation correspondant. Ainsi, on peut fournir à l'aide du dispositif de traitement 10 un signal qui est fonction de la proportion d'oxygène dans les gaz d'échappement, le dispositif de traitement 10 effectuant la comparaison entre le courant fourni par la cellule placée dans les gaz d'échappement et le courant fourni par la cellule de référence parcourue par de l'air ambiant ayant, par définition, une proportion constante d'oxygène d'environ 21%, cet air étant porté pratiquement à la même température que les gaz d'échappement à analyser.

A l'aide du graphique de la fig. 2, on va examiner par exemple le cas d'une alimentation en haute tension négative et d'un rapport $V_{HT}/I_{HT}$ constant, la première entrée de l'amplificateur/comparateur 14 étant reliée à la sortie de l'amplificateur 13, et l'autre entrée de l'amplificateur 14 étant reliée à la sortie de l'amplificateur 19 qui lui fournit une information proportionnelle à la valeur de la haute tension délivrée par la source de tension 7.

Etant donné que dans les gaz d'échappement la proportion d'oxygène peut généralement varier dans une gamme de valeurs comprises entre 0 et 10%, on voit d'après la fig. 4 que cette gamme est entièrement située sur la partie ascendante de la courbe qui y est représentée. Pour le pourcentage d'oxygène dans l'air (environ 21%), on détermine d'après la fig. 4 la tension initiale d'ionisation correspondante $V_{oA}$. La courbe 21 de la fig. 2 a été tracée pour une cellule à ionisation parcourue par de l'air (aux conditions de température et de pression précitées).

Pour un certain pourcentage d'oxygène, compris entre 0 et 10% environ, par exemple 1%, dans les gaz d'échappement, on détermine, d'après la courbe de la fig. 4, le potentiel initial d'ionisation correspondant $V_{oB}$ pour lequel on obtient la courbe 20 de la fig. 2, pratiquement par translation horizontale de la courbe 21.

Etant donné que l'on maintient constant le rapport $V_{HT}/I_{HT}$, le point de fonctionnement de la cellule 1 ne peut que se déplacer sur la droite 24 tracée pour ledit rapport constant. Par conséquent, pour le pourcentage d'oxygène d'environ 21% de l'air ambiant dans les conditions précitées, le point de fonctionnement A de la cellule sera à l'intersection des courbes 21 et 24. Pour le pourcentage d'oxygène, d'environ 1%, pour lequel on obtient la courbe 20, le point de fonctionnement correspondant de la cellule est situé à l'intersection des courbes 20 et 24 et est référencé B. Par conséquent, lorsque le pourcentage d'oxygène augmente, depuis la valeur d'environ 1% jusqu'à la valeur de 21%, le point de fonctionnement de la cellule 1 se déplace depuis le point B jusqu'au point A, les courants correspondants recueillis étant $I_1$ et $I_2$.

Le dispositif de traitement 10 compare le courant recueilli par la cellule 1 au courant recueilli par la cellule 2 et fournit une information correspondante qui peut être exploitée de façon appropriée pour affichage ou pour régulation par exemple.

On va maintenant expliquer le cas où la source d'alimentation 7 fournit une haute tension positive de valeur constante, le commutateur 15 étant dans la position inverse de celle représentée sur la fig. 1, c'est-à-dire que la première entrée de l'amplificateur-comparateur 14 reçoit, par l'intermédiaire du potentiomètre 16, une tension de référence constante, le commutateur 15a reliant la deuxième entrée de l'amplificateur-comparateur 14 à la sortie de l'amplificateur 19.

Pour un premier pourcentage d'oxygène dans le gaz mesuré, de 21% environ, on obtient la courbe 22 dont le potentiel initial d'ionisation est $V_{oc}$ (environ 2,4 KV), et pour un second pourcentage d'oxygène, inférieur au premier (par exemple environ 1%), on détermine, d'après la courbe de la fig. 3, le potentiel initial d'ionisation correspondant $V_{od}$, supérieur audit premier potentiel d'ionisation $V_{oc}$, étant bien entendu que le pourcentage d'oxygène reste, dans tous les cas, inférieur à environ 25%, dans la zone dans laquelle la courbe caractéristique de la fig. 3 est constamment décroissante.

En reportant sur la graphique de la fig. 2 la valeur $V_{od}$, on obtient la courbe 23 de la même manière que l'on obtient la courbe 20. Etant donné que, par hypothèse, la source de haute tension 7 fonctionne à tension constante, de valeur $V_1$, les points de fonctionnement de la cellule 1 pour lesdits deux pourcentages d'oxygène sont situés aux intersections respectives des courbes 22 et 23 avec la verticale 25 d'abscisse $V_1$, lesdits points de fonctionnement étant respectivement référencés C et D. Aux points C et D correspondent respectivement des courants $I_4$ et $I_3$ que le dispositif de traitement 10 transforme en valeurs de pourcentage d'oxygène. Si, au lieu d'alimenter les cellules à tension positive constante, on les alimentait à courant constant, la haute tension étant toujours positive mais non régulée (commutateur 15 dans la position représentée sur la fig. 1 et commutateur 15a dans la position inverse), les pourcentages d'oxygène mesurés étant les mêmes que ci-dessus, le courant absorbé par la cellule 2 de référence diminuerait et le courant absorbé par la cellule 1 de mesure augmenterait lorsque le pourcentage d'oxygène diminuerait de 21% audit second pourcentage car, par hypothèse, le courant total fourni par la source 7 reste constant.

Il est bien entendu que si la haute tension fournie par la source 7 est positive, on peut également réguler la source 7 de façon que le rapport $V_{HT}/I_{HT}$ soit constant, et que si la haute tension délivrée par la source 7 est négative, on peut réguler la source 7 de façon qu'elle délivre un courant ou une haute tension de valeur constante.

Le choix de la polarité de la haute tension dans ce mode de réalisation peut dépendre de plusieurs facteurs : pour une haute tension négative, le potentiel initial d'ionisation est en général inférieur à celui correspondant à une haute tension négative, et dans certains cas, la différence de haute tension d'alimentation peut être d'environ 1000 V, ce qui peut offrir des avantages. Cependant, avec une haute tension négative, il subsiste un doute lorsque la proportion d'oxygène dépasse environ 10% : à une telle proportion supérieure à environ 10% correspond à un même potentiel d'ionisation qu'à une proportion inférieure à 10% du fait que la courbe de la fig. 4 passe par un maximum, et il est alors nécessaire de prévoir un dispositif de levée de doute.

De même, on voit d'après la fig. 2 que suivant le choix d'un régime à $V_{HT}/I_{HT}$, $V_{HT}$ ou $I_{HT}$ constant, la différence d'amplitude du signal recueilli à la sortie 12 pour une même différence de pourcentages d'oxygène (c'est-à-dire le coefficient d'amplification du dispositif de mesure) est plus ou moins importante, et pour chaque cas particulier on choisira le régime optimal.

Dans le mode de réalisation représenté schématiquement sur la fig. 5, la sonde de l'invention qui se trouve placée dans le trajet des gaz à analyser comporte une cellule à ionisation unique du type à éclateur munie d'une électrode sensiblement plane 26 qui est portée au potentiel positif d'une haute tension d'alimentation reliée à l'électrode 26 par le fil d'alimentation 27. En face de la surface plane de l'électrode 26 et à un écartement de quelques millimètres se trouve disposée une électrode 28 en forme de pointe mise à la terre, au potentiel négatif par la connexion électrique 29. On notera qu'il est important que l'électrode plane 26 se trouvant au potentiel positif haute tension présente une configuration dénuée d'aspérités. L'électrode en forme de pointe 28 disposée perpendiculairement à la surface plane de l'électrode 26 peut être réalisée en métal résistant à la haute température et par exemple en tungstène. On peut avantageusement constituer l'électrode 28 sous la forme d'un simple fil de très faible diamètre disposé perpendiculairement à l'électrode 26 et écarté de cette dernière de quelques millimètres.

L'agencement de ces électrodes sous la forme de la cellume à ionisation représentée sur la fig. 5 peut avantageusement, afin de résister aux fortes températures des gaz de combustion à analyser, s'insérer dans un montage analogue à celui d'une bougie d'allumage pour moteur à combustion interne. Un capot métallique de protection comportant des fentes latérales 31 permettant le passage des gaz à analyser recouvre avantageusement la zone des deux électrodes 26 et 28 afin d'éviter des perturbations éventuelles dans la mesure dues aux vitesses d'écoulement ou à d'éventuelles particules solides se trouvant en suspension dans le mélange gazeux à analyser.

Le traitement des signaux électriques fournis par la cellule à ionisation à éclateur de la fig. 5 peut être réalisé de toute manière appropriée. C'est ainsi que l'on pourra mesurer la valeur moyenne du courant apparaissant sur l'électrode en forme de pointe 28. On pourra également mesurer la fréquence des décharges électriques de la cellule à ionisation. Les variations de fréquence pourront être mesurées par un compteur digital par rapport à une référence de temps et fourniront une mesure de la teneur en oxygène se présentant sous forme digitale.

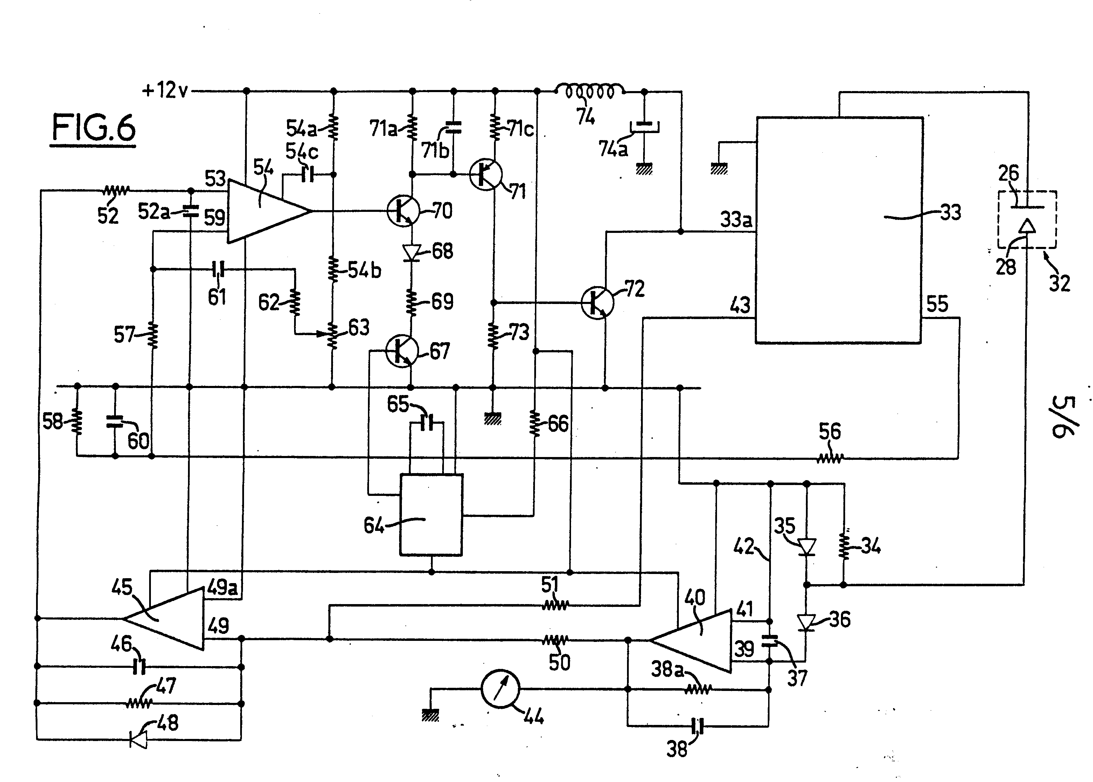

La fig. 6 illustre à titre d'exemple un circuit électrique qui pourrait être utilisé dans une sonde utilisant une cellule à ionisation telle que celle représentée sur la fig. 5 dans laquelle le traitement des signaux se fait par détection de la valeur moyenne du courant, la haute tension d'alimentation étant régulée de façon que le rapport $V_{HT}/I_{HT}$ soit maintenu constant (droite 24 sur la fig. 2).

Sur cette figure, on retrouve la cellule à ionisation 32 du type à éclateur telle que représentée sur la fig. 5 de manière plus détaillée. L'électrode plane 26 est reliée à l'alimentation à haute tension 33. L'électrode en forme de pointe 28 délivre un courant pulsé faisant apparaître aux bornes de la résistance 34 une tension qui après avoir été convenablement redressée par les diodes 35 et 36 et filtrée par les condensateurs 37 et 38 est appliquée à l'une des entrées 39 de l'amplificateur 40 dont le gain est fixé par la résistance de contre-réaction 38a. L'amplificateur 40 reçoit en outre sur sa deuxième entrée 41 par la connexion 42 une tension continue proportionnelle à la haute tension d'alimentation provenant de la sortie 43 de l'alimentation 33.

Le galvanomètre 44 placé à la sortie de l'amplificateur 40 permet de mesurer la valeur moyenne du courant apparaissant sur la cellule à ionisation, valeur moyenne qui est proportionnelle à la concentration en oxygène recherchée.

L'amplificateur 45 monté en intégrateur au moyen du condensateur 46 et de la résistance de contre-réaction 47, convenablement protégé par la diode 48 reçoit sur sa première entrée 49 une tension proportionnelle au rapport $V_{HT}/I_{HT}$ par l'intermédiaire du diviseur de tension constitué par la résistance 50 reliée à la sortie de l'amplificateur 40 et la résistance 51 reliée à la sortie 43 de l'alimentation haute tension 33. La deuxième entrée 49a de l'amplificateur 45 est reliée à la masse.

La tension continue issue de l'amplificateur intégrateur 45 est appliquée à travers la résistance 52 à l'entrée 53 de l'amplificateur d'erreur 54, d'éventuels parasites étant filtrés par le condensateur 52a.

La haute tension issue de la sortie 55 de l'alimentation haute tension 33 est appliquée par l'intermédiaire du diviseur de tension constitué par les résistances 56, 57 et 58 à la deuxième entrée 59 de l'amplificateur d'erreur 54, le condensateur 60 jouant le rôle de filtre. Le condensateur 61, la résistance 62 en série et le potentiomètre 63, sont montés entre l'entrée 59 de l'amplificateur 54 et l'alimentation de l'ensemble du circuit et permettent de régler la rapidité de réponse de la boucle de régulation.

Le circuit intégré 64 monté par l'intermédiaire du condensateur 65 et de la résistance 66 constitue un circuit oscillant délivrant des impulsions au transistor NPN 67 agissant comme un interrupteur et dont le collecteur est relié par la diode 68 et la résistance 69 à l'émetteur du transistor NPN 70. Le transistor 70 est relié par sa base à la sortie de l'amplificateur d'erreur 54 et délivre par son collecteur sur la base du transistor PNP 71 des impulsions de courant modulées en amplitude par la tension issue de l'amplificateur d'erreur 54. On notera que ce dernier est monté par l'intermédiaire des résistances 54a et 54b et du condensateur 54c.

Le transistor 71 monté de manière classique par l'intermédiaire de la résistance 71a et du condensateur 71b reliés à sa base en parallèle ainsi que de la résistance 71c reliée à son émetteur délivre par son collecteur un courant qui alimente la base du transistor de puissance NPN 72 par l'intermédiaire de la résistance 73 reliée à la masse. Les impulsions provenant du collecteur du transistor 72 se comportant en générateur de courant sont appliquées à l'entrée 33a de l'alimentation haute tension 33. On notera que le transistor 72 ne fonctionne pas en régime de saturation et permet d'obtenir la régulation de la haute tension par la modulation en amplitude du courant de l'impulsion d'excitation apparaissant sur son collecteur.

Le circuit se complète par une bobine de self-induction de protection 74 et un condensateur électrolytique de découplage 74a reliés à l'entrée 33a.

L'alimentation en haute tension 33 qui dans l'exemple illustré est un circuit imprimé comprend un transformateur de puissance non représenté constituant un circuit oscillant qui est excité par les impulsions courtes provenant du transistor 72.

On voit finalement que l'ensemble du circuit se décompose en un circuit de puissance, un circuit de modulation et pilotage et un circuit de mesure de la haute tension et d'amplification du signal d'erreur.

Le circuit de puissance est constitué principalement par les deux transistors 71 et 72 et l'alimentation à haute tension 33. Le circuit de modulation et de pilotage comprend l'oscillateur 64 les transistors 67 et 70. Le circuit de mesure de la haute tension et d'amplification d'erreur comprend les amplificateurs 40 et 45 ainsi que l'amplificateur d'erreur 54. L'ensemble constitue un système de régulation permettant de maintenir constant le rapport $V_{HT}/I_{HT}$.

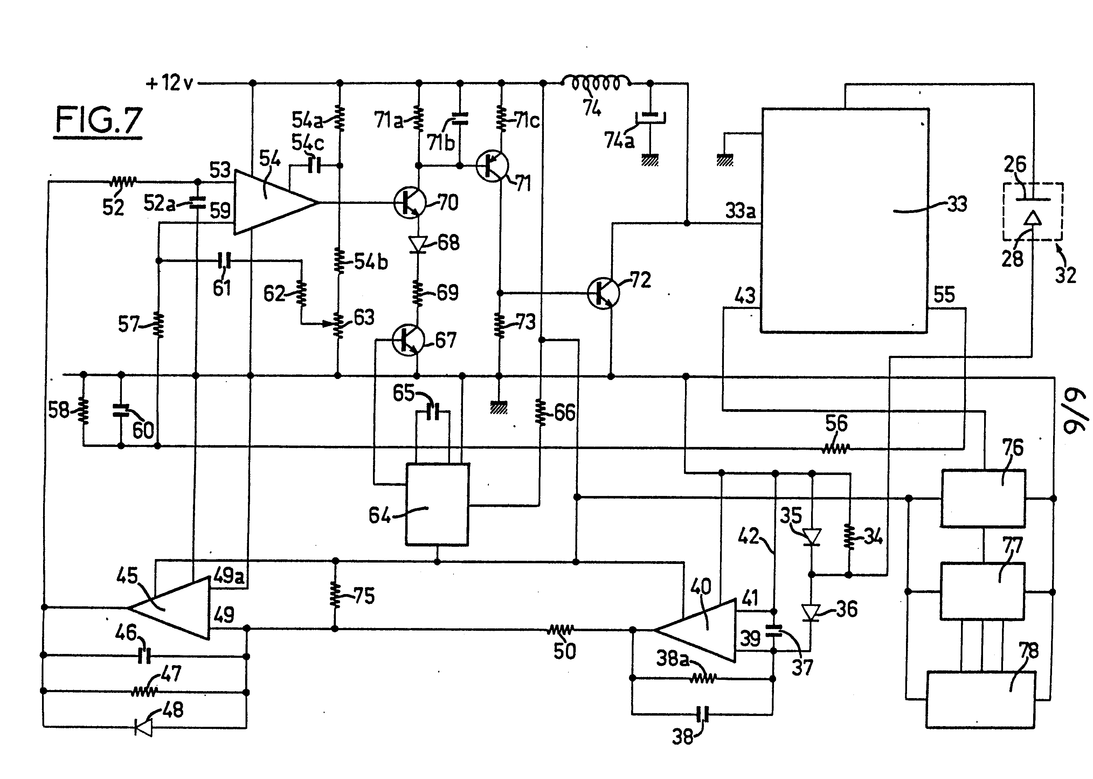

Le schéma de la fig. 7 sur lequel les mêmes éléments portent les mêmes références que sur la fig. 6 montre un système de régulation permettant de maintenir constant le courant $I_{HT}$ fourni par l'alimentation à haute tension. Dans ce mode de réalisation, l'entrée 49 de l'amplificateur 45 ne reçoit plus comme précédemment un signal basse tension continu proportionnel à la haute tension délivrée par l'alimentation 33 et provenant de la sortie 43. Dans ce mode de réalisation au contraire le courant est maintenu constant par la résistance 75 branchée en parallèle entre la tension d'alimentation du circuit et l'entrée 49.

La mesure pourrait se faire comme dans le mode de réalisation de la fig. 6 par la valeur moyenne du courant apparaissant sur l'électrode en forme de pointe 28 de la cellule à ionisation 32 en reprenant le même schéma que sur la fig. 6. Sur la fig. 7 on a montré une autre variante dans laquelle on mesure au contraire la fréquence des décharges dans la cellule à ionisation 32. Dans cette variante les impulsions de basse tension apparaissant à la sortie 43 de l'alimentation haute tension 33 sont appliquées directement à un circuit de mise en forme 76 du type classique éliminant les parasites puis à une bascule 77 permettant le comptage des impulsions qui sont ensuite affichées sur un dispositif 78 qui peut donner directement le pourcentage d'oxygène dans le mélange gazeux à analyser.

On comprendra bien entendu que la mesure de la fréquence des décharges électriques dans la cellule d'ionisation pourrait également être employée dans le schéma de régulation de la fig. 6.

Grâce au dispositif et au procédé de l'invention, on obtient une mesure pratiquement instantanée du pourcentage d'oxygène dans les gaz d'échappement, les sondes utilisées étant pratiquement insensibles à l'encrassement de quelque nature qu'il soit, ces sondes étant également fidèles et de construction peu onéreuse.

Les sondes de l'invention étant de très petites dimensions, elles peuvent être facilement disposées sur le trajet des gaz d'échappement d'un moteur de véhicule automobile, le résultat de la mesure pouvant commander un dispositif de régulation dudit moteur pour lui assurer un fonctionnement optimal, ce qui permet de diminuer la pollution causée par ses gaz d'échappement, en particulier au ralenti lorsque le mélange air-carburant est pauvre.

On notera que les courbes de la fig. 2 ont été établies pour des gaz ayant une température de 300°K environ, mais on comprendra facilement que pour un cas réel de mesure de gaz d'échappement, dont la température peut être nettement supérieure à cette valeur, les courbes seront translatées vers la gauche, le cas de la température de 300°K ayant été seulement choisi pour simplifier l'explication.

19

D'autre part, on a supposé, dans toutes les explications qui précèdent, que l'ionisation était due pratiquement en totalité à l'oxygène, car ce gaz est celui ayant le plus faible potentiel d'ionisation parmi tous les gaz pouvant être présents dans les gaz d'échappement d'un moteur à combustion. S'il n'en était pas ainsi dans certains cas particuliers, il y aurait lieu de faire varier la tension et/ou le courant fournis par l'alimentation haute tension, et/ou de faire varier les formes et/ou les dimensions de l'une ou des deux cellules de mesure.

20

## REVENDICATIONS

1. Procédé de mesure de la concentration en oxygène dans un mélange gazeux et en particulier dans les gaz issus d'une combustion chimique tels que les gaz d'échappement d'un moteur à combustion interne ou externe d'un réacteur ou d'une chaudière, caractérisé par le fait qu'on provoque l'ionisation continue ou par décharge du mélange gazeux à analyser et qu'on mesure une grandeur électrique liée au potentiel initial d'ionisation dans le mélange gazeux.

2. Procédé selon la revendication 1, caractérisé par le fait que l'on provoque une ionisation continue et que l'on mesure le courant apparaissant entre deux électrodes dont l'une est soumise à une haute tension.

3. Procédé selon la revendication 2, caractérisé par le fait que l'on provoque la même ionisation dans un gaz de référence pratiquement à la même température que le mélange gazeux à analyser et que l'on effectue le rapport ou la différence des courants mesurés.

4. Procédé selon la revendication 1, caractérisé par le fait que l'on provoque une ionisation par décharge et que l'on mesure la valeur moyenne du courant apparaissant entre deux électrodes dont l'une est soumise à une haute tension.

5. Procédé selon la revendication 1, caractérisé par le fait que l'on provoque une ionisation par décharge et que l'on mesure la fréquence des décharges électriques entre deux électrodes dont l'une est soumise à une haute tension.

6. Procédé selon l'une quelconque des revendications 2 à 5, caractérisé par le fait que l'on régule la haute tension d'alimentation de l'une des électrodes de façon que le rapport haute tension/courant ou la haute tension, ou le courant délivré soit maintenu à une valeur constante.

7. Sonde électrique à ionisation permettant la mise en oeuvre du procédé selon l'une quelconque des revendications 1 à 3, caractérisée par le fait qu'elle comprend : une alimentation haute tension; une première cellule à ionisation comportant une électrode de source reliée à l'alimentation et une électrode réceptrice, ladite première cellule étant disposée dans le trajet des gaz à analyser; une deuxième cellule à ionisation identique à la première cellule dont l'électrode de source est également reliée à l'alimentation et traversée par de l'air ambiant porté pratiquement à la même température que celle des gaz traversant la première cellule; et un dispositif de traitement recueillant les courants apparaissant sur les électrodes réceptrices des deux cellules.

8. Sonde selon la revendication 7, caractérisée par le fait que les deux électrodes de source sont alimentées avec une haute tension positive ou négative.

9. Sonde selon les revendications 7 ou 8, caractérisée par le fait que chacune des cellules à ionisation comprend un tube cylindrique en matériau électriquement conducteur dans l'axe duquel est disposé une électrode de source constituée par un fil d'émission conducteur supporté par des moyens isolants.

10. Sonde selon la revendication 9, caractérisée par le fait que le diamètre inférieur de chacun desdits tubes est de l'ordre de grandeur de 2 millimètres sa longueur étant de l'ordre de grandeur de 5 millimètres, et que le fil d'émission est en tungstène doré d'un diamètre d'environ 10 à 20 microns.

11. Sonde électrique à ionisation permettant la mise en oeuvre du procédé selon l'une quelconque des revendications 4 ou 5, caractérisée par le fait qu'elle comprend : une alimentation haute tension; une cellule à ionisation comportant une électrode sensiblement plane reliée à l'alimentation haute tension et une pointe disposée perpendiculairement à l'électrode plane et écartée de cette dernière, ladite cellule étant disposée dans le trajet des gaz à analyser; et un dispositif de traitement recueillant le courant apparaissant sur la pointe.

12. Sonde selon la revendication 11, caractérisée par le fait que l'électrode plane est alimentée avec une haute tension positive.

13. Sonde selon les revendications 11 ou 12, caractérisée par le fait que la haute tension est peu supérieure au potentiel initial d'ionisation de l'oxygène.

14. Sonde selon l'une quelconque des revendications 11 à 13, caractérisée par le fait qu'elle comprend un capot de protection muni de fentes pour le passage du gaz à analyser et recouvrant la zone comprenant l'électrode et la pointe.

15. Sonde selon l'une quelconque des revendications 7 à 14, caractérisée par le fait qu'elle comprend en outre des moyens de régulation agissant sur l'alimentation haute tension de façon que le rapport haute tension/courant, ou la haute tension, ou le courant délivré soit maintenu à une valeur constante.

# FIG.1

FIG.2

## FIG.3

## FIG.4

## FIG.5

FIG.6

5/6

0006980

FIG.7

.J006980

**Office européen des brevets**

**RAPPORT DE RECHERCHE EUROPEENNE**

Numéro de la demande

EP 79 10 1277

## DOCUMENTS CONSIDERES COMME PERTINENTS

| Catégorie | Citation du document avec indication, en cas de besoin, des parties pertinentes | Revendica- tion concernée |
|---|---|---|
| | FR - A - 2 129 380 (T.I.F. INSTRU-MENTS) <br><br> * page 2, ligne 37 à page 6, ligne 24; figure 1 * <br><br> --- | 1,4,8, 11 |
| | FR - A - 1 239 563 (U.K. ATOMIC ENERGY AUTHORITY) <br><br> * en entier * <br><br> --- | 1,2,4, 6,8,11, 15 |
| | US - A - 3 439 261 (J.C. LOH) <br><br> * colonne 2, ligne 36 à colonne 6, ligne 26; figures 1,3 * <br><br> --- | 1,2,6, 8,11, 15 |
| | GB - A - 895 602 (I.C.I.) <br><br> * page 1, ligne 27 à page 2, ligne 97; figures * <br><br> --------- | 1,3,7, 8,9 |

**CLASSEMENT DE LA DEMANDE (Int. Cl.³)**

G 01 N 27/68
F 02 B 77/00

**DOMAINES TECHNIQUES RECHERCHES (Int. Cl.³)**

G 01 N 27/68

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 06-07-1979 | DUCHATELLIER |

OEB Form 1503.1  06.78